# EUROPÄISCHE PATENTSCHRIFT

(11) **EP 2 596 990 B1**
(45) Veröffentlichungstag und Bekanntmachung des Hinweises auf die Patenterteilung: **23.01.2019**
(21) Anmeldenummer: 12193532.4
(22) Anmeldetag: 21.11.2012
(51) Int. Cl.: B60Q 1/14, B60Q 1/06

(54) **Verfahren und Steuergerät zum Steuern von Hauptscheinwerfern mit einstellbarer Hell-Dunkel-Grenze zum Entblenden von Objekten**
Method and controller for controlling main headlights with adjustable light/dark limit for preventing glare from objects
Procédé et appareil de commande pour la commande de phares principaux avec limite clair-obscur réglable pour éviter l'éblouissement d'objets

(30) Priorität: 22.11.2011 DE 102011055606
(43) Veröffentlichungstag der Anmeldung: 29.05.2013
(73) Patentinhaber: HELLA GmbH & Co. KGaA, 59552 Lippstadt (DE)
(72) Erfinder: Irmscher, Tobias, 33324 Gütersloh (DE); Wilks, Carsten, 59555 Lippstadt (DE); Schmidt, Christian, 33106 Paderborn (DE); Hüster, Christian, 33154 Salzkotten (DE); Krause, Stefan, 33775 Versmold (DE)

(56) Entgegenhaltungen:
- EP-A1- 2 147 823
- EP-A2- 2 103 867
- DE-A1-102007 040 042
- DE-A1-102008 025 807
- US-A- 5 645 338
- US-A1- 2009 086 497
- US-A1- 2009 254 247

## Beschreibung

Die Erfindung betrifft ein Steuergerät zum Steuern von Hauptscheinwerfern eines Fahrzeugs mit einstellbaren Lichtverteilungen und mit einer einstellbaren vertikalen Hell-Dunkel-Grenze in wenigstens einer Lichtverteilung,
- mit einem Eingang zum Einlesen von Informationen über den Ort von vor dem Fahrzeug befindlichen, zu entblendenden Objekten, insbesondere vorausfahrenden und/oder entgegenkommenden Fahrzeugen,
- mit einem Verarbeitungsmittel,
   - mit welchem in Abhängigkeit der eingelesenen Informationen Stellgrößen zum Einstellen einer am rechten und/oder einer am linken Hauptscheinwerfer einstellbaren Lichtverteilung erzeugbar sind und/oder
   - mit dem in Abhängigkeit der eingelesenen Informationen Stellgrößen zum Einstellen einer vertikalen Hell-Dunkel-Grenze einer an dem rechten Hauptscheinwerfer eingestellten Lichtverteilung und einer vertikalen Hell-Dunkel-Grenze einer an dem linken Hauptscheinwerfer eingestellten Lichtverteilung erzeugbar sind,
- mit einem Ausgang, an welchem die Stellgrößen zur Einstellung der Lichtverteilungen und/oder der vertikalen Hell-Dunkel-Grenzen bereitstellbar sind.

Der Ort der vor dem Fahrzeug befindlichen, zu entblendenden Objekte kann zum Beispiel durch den Flächenwinkel, den Höhenwinkel und die Entfernung beschrieben werden.

Die Erfindung betrifft ferner ein Verfahren zum Steuern von Hauptscheinwerfern eines Fahrzeugs mit einstellbaren Lichtverteilungen und mit einer einstellbaren vertikalen Hell-Dunkel-Grenze in wenigstens einer Lichtverteilung, wobei
- Informationen über den Ort von vor dem Fahrzeug befindlichen, zu entblendenden Objekten, insbesondere vorausfahrenden und/oder entgegenkommenden Fahrzeugen ermittelt werden,
- in Abhängigkeit der eingelesenen Informationen Stellgrößen zum Einstellen einer am rechten und/oder einer am linken Hauptscheinwerfer einstellbaren Lichtverteilung erzeugbar sind und/oder
- in Abhängigkeit der eingelesenen Informationen Stellgrößen zum Einstellen einer vertikalen Hell-Dunkel-Grenze einer an dem rechten Hauptscheinwerfer eingestellten Lichtverteilung und einer vertikalen Hell-Dunkel-Grenze einer an dem linken Hauptscheinwerfer eingestellten Lichtverteilung erzeugbar sind, und
- die Stellgrößen zur Einstellung der Lichtverteilungen und/oder der vertikalen Hell-Dunkel-Grenzen bereitgestellt werden.

Mit einem derartigen Steuergerät können die Hauptscheinwerfer eines Fahrzeuges so eingestellt werden, dass Vorausfahrende oder entgegenkommende Fahrzeuge nicht oder nur in zulässiger Weise geblendet werden. Die vorausfahrenden oder entgegenkommenden Fahrzeuge werden dazu meistens über Kameras oder andere Sensoren erfasst, die Informationen über die Orte der vor dem Fahrzeug befindlichen, zu entblendenden Objekte an das Steuergerät übermitteln. Bei Lichtverteilungen mit einstellbaren vertikalen Hell-Dunkel-Grenzen wird durch Verschieben der vertikalen Hell-Dunkel-Grenze in dem Bereich, in dem sich das zu entblendende Objekt befindet, ein entblendeter Bereich erzeugt, der auch als Tunnel bezeichnet wird. Bei den bisher bekannten Systemen sind die Steuergeräte so programmiert, dass jedes erkannte Objekt entblendet wird, selbst wenn es nicht durch die Scheinwerfer geblendet wird, sei es weil das Objekt zu weit entfernt ist oder weil es sich nur in einem Randbereich des von den Scheinwerfern beleuchteten Fahrzeugvorfeldes befindet.

Dieser Ansatz hat den Nachteil, dass auch Bereiche entblendet und damit weniger beleuchtet werden, in denen keine Entblendung notwendig ist. So werden auch solche Objekte als zu entblendende Objekte wahrgenommen und erkannt, die von den Scheinwerfern nur schwach beleuchtet werden.

Hier setzt die vorliegende Erfindung an.

Der vorliegenden Erfindung liegt das Problem zu Grunde, ein Steuergerät der eingangs genannten Art so zu verbessern, dass eine Entblendung eines Objektes nur dann durchgeführt wird, wenn eine Entblendung tatsächlich notwendig ist. Der vorliegenden Erfindung liegt ferner das Problem zu Grunde ein Verfahren vorzuschlagen, mit dem ebenfalls erreicht wird, nur die Objekte zu Entblenden, bei denen eine Entblendung tatsächlich notwendig ist.

Diese Aufgabe wird erfindungsgemäß dadurch gelöst, dass das Steuergerät einen Speicher aufweist, in welchem Beleuchtungsstärken von Orten vor den Hauptscheinwerfern für die durch das Steuergerät einstellbaren Lichtverteilungen der Hauptscheinwerfer gespeichert sind.

Mit einem derartigen Steuergerät kann ein Verfahren durchgeführt werden, dass die Aufgabe im Hinblick auf das Verfahren löst. Im Hinblick auf das Verfahren wird die Aufgabe dadurch gelöst, dass für den Ort des vor dem Fahrzeug befindlichen, zu entblendenden Objektes oder die Orte der vor dem Fahrzeug befindlichen, zu entblendenden Objekte eine gespeicherte Beleuchtungsstärke oder gespeicherte Beleuchtungsstärken vor den Hauptscheinwerfern mit einem vorbestimmten Beleuchtungsstärkebetrag verglichen wird.

Mittels des Verarbeitungsmittels eines erfindungsgemäßen Steuergeräts ist aus den gespeicherten Beleuchtungsstärken ermittelbar, ob mittels der an den Hauptsscheinwerfern eingestellten Lichtverteilungen an einem Ort vor den Hauptscheinwerfern befindlichen, zu entblendenden Objekte eine Beleuchtungsstärke kleiner oder größer eines vorbestimmten Beleuchtungsstärkebetrags vorliegt. Bei Überschreiten des vorbestimmten Beleuchtungsstärkebetrages durch die für den Ort des zu entblendenden Objektes vor den Hauptscheinwerfer ermittelte Beleuchtungsstärke sind zum Zwecke der Reduzierung der Beleuchtungsstärke an dem Ort des zu entblendenden Objektes die mittels des Verarbeitungsmittels an den Hauptscheinwerfern
- eingestellten Hell-Dunkel-Grenzen,
- eingestellten Lichtverteilungen durch Dimmen oder
- eingestellten Lichtverteilungen und eingestellten Hell-Dunkel-Grenzen veränderbar.

Aus dem Dokument DE 10 2008 025 807 A1 ist ein Steuergerät zum Einstellen einer vertikalen Hell-Dunkel-Grenze eines oder mehrerer Hauptscheinwerfer bekannt. Dieses bekannte Steuergerät bietet eine Lösung zur Entblendung eines entgegenkommenden Fahrzeugs bei der Vorbeifahrt. Das entgegenkommende Fahrzeug wird bei eingeschaltetem Fernlicht durch die Verschiebung der vertikalen Hell-Dunkel-Grenzen entblendet. Soll das entgegenkommende Fahrzeug auf der linken Seite am Eigenfahrzeug vorbeifahren, wird dabei die linke vertikale Hell-Dunkel-Grenze wegen des sich betragsmäßig vergrößernden Objektwinkels immer weiter nach links verschoben. Dabei wird irgendwann eine Grenze des Verschiebungsbereichs erreicht. Wird in diesem Moment die Fernlichtverteilung am Eigenfahrzeug beibehalten, tritt das entgegenkommende Fahrzeug aus dem entblendeten Bereich, dem sogenannten Tunnel, aus und wird von den Fernlichtscheinwerfern beleuchtet. Es kommt dann zu einer Blendung. Um das zu verhindern wird in dem Moment, in welchem das entgegenkommende Fahrzeug aus dem Tunnel austritt, die Adaption der vertikalen Hell-Dunkel-Grenzen ausgeschaltet und zugleich in eine entblendende Lichtverteilung gewechselt. Aufgrund von Verzögerungen im Prozess kann es aber vorkommen, dass von dem Moment, in dem das entgegenkommende Fahrzeug aus dem Tunnel austritt, bis zu dem Moment, in welchem in die entblendende Lichtverteilung gewechselt wird, eine Zeit vergeht, in welcher der Fahrer des entgegenkommenden Fahrzeugs geblendet wird. In dem Dokument DE 10 2008 025 807 A1 diesbezüglich vorgeschlagen automatisch dann die Adaption der vertikalen Hell-Dunkel-Grenzen auszuschalten und in die entblendende Lichtverteilung zu wechseln, wenn bei einem gegebenen Objektwinkel eine vorbestimmte Entfernung unterschritten wird.

Anders als bei der vorliegenden Erfindung wird also beim dem aus dem Dokument DE 10 2008 025 807 A1 bekannten Steuergerät die Adaption der vertikalen Hell-Dunkel-Grenzen ausgeschaltet, während sie bei der Erfindung aktiviert bleibt und die Verstel lung der vertikalen Hell-Dunkel-Grenzen zum Reduzieren der Beleuchtungsstärke am Ort des zu entblendenden Objekts genutzt wird.

Ferner kann bei Unterschreiten des vorbestimmten Beleuchtungsstärkebetrages durch die für den Ort des zu entblendenden Objektes vor den Hauptscheinwerfern ermittelten Beleuchtungsstärke die mittels des Verarbeitungsmittels an den Hauptscheinwerfern eingestellten Lichtverteilungen und/oder Hell-Dunkel-Grenzen unveränderbar sein.

Beim erfindungsgemäßen Verfahren kann bei Unterschreiten des vorbestimmten Beleuchtungsstärkebetrages durch die für den Ort des zu entblendenden Objektes vor den Hauptscheinwerfer ermittelten Beleuchtungsstärke oder Beleuchtungsstärken die mittels des Verarbeitungsmittels an den Hauptscheinwerfern eingestellten Lichtverteilungen und/oder Hell-Dunkel-Grenzen unverändert bleiben. Objekte, an deren Orten die Beleuchtungsstärke so gering ist, dass eine Beleuchtung durch die Hauptscheinwerfer des Fahrzeugs nicht als Blendung wahrgenommen wird, werden somit nicht entblendet.

Dagegen kann bei Überschreiten des vorbestimmten Beleuchtungsstärkebetrages durch die für den Ort des zu entblendenden Objektes vor den Hauptscheinwerfer ermittelten Beleuchtungsstärke oder Beleuchtungsstärken die mittels des Verarbeitungsmittels an den Hauptscheinwerfern eingestellten Lichtverteilungen und/oder Hell-Dunkel-Grenzen zum Zwecke der Reduzierung der Beleuchtungsstärke am Ort des zu entblenden Objekts verändert werden. Dadurch ist sichergestellt, dass die Objekte entblendet werden, bei denen eine Entblendung notwendig ist.

Die Reduzierung der Beleuchtungsstärke am Ort des zu entblendenden Objektes kann
- durch eine Verschiebung der Hell-Dunkel-Grenze oder
- durch Dimmen der Lichtverteilung oder
- durch eine Verschiebung der Hell-Dunkel-Grenze und Dimmen der Lichtverteilung oder durch Verschiebung der Hell-Dunkel-Grenze und Einstellung einer abblendlichtähnlichen Lichtverteilung oder einer anderen geeigneten Lichtverteilung
erreicht werden.

Anhand der beigefügten Zeichnungen wird die Erfindung nachfolgend näher erläutert. Dabei zeigt:
- Fig. 1: die Beleuchtungsstärkeverteilung in einer Entfernung eines zweiten Fahrzeugs zu einem ersten Fahrzeug und

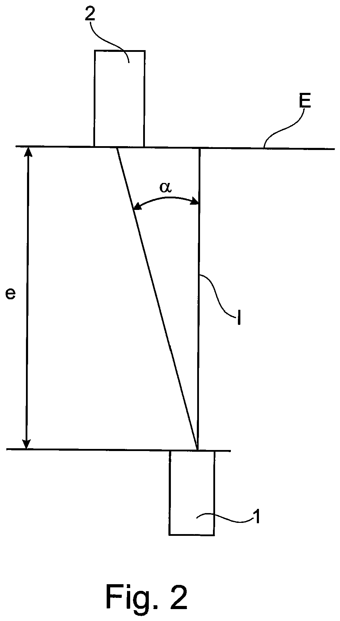

- Fig. 2: eine schematische Darstellung der Lage des ersten Fahrzeugs, des zweiten Fahrzeugs, der Fahrzeuglängsrichtung des ersten Fahrzeugs und die Beleuchtungsstärkeverteilung von Hauptscheinwerfern des ersten Fahrzeugs in der Entfernung des zweiten Fahrzeugs.

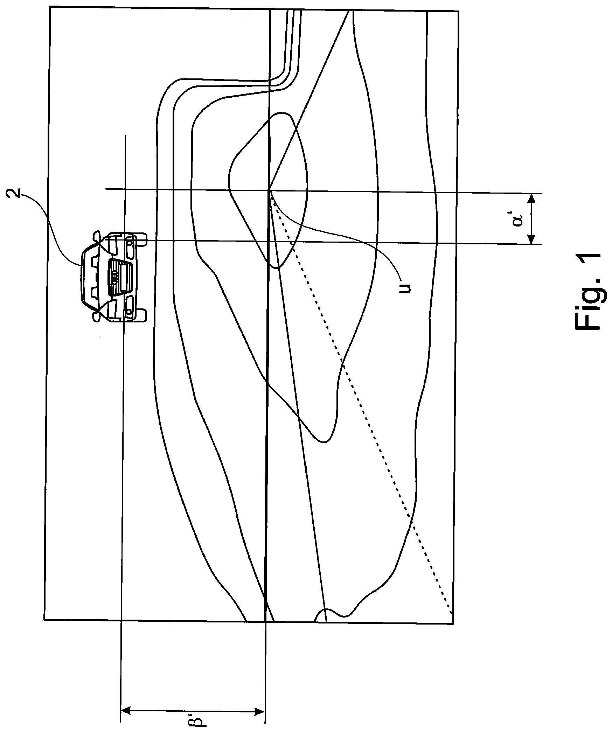

Die in der Figur 1 dargestellte Beleuchtungsstärkeverteilung gibt die Beleuchtungsstärke in einer Ebene E senkrecht zur Fahrzeuglängsrichtung I des ersten Fahrzeugs 1 wieder. In Figur 1 sind unterschiedliche Beleuchtungsstärken durch Isolux-Linien dargestellt. Die Fahrzeuglängsrichtung I des ersten Fahrzeugs 1 schneidet die Ebene in einem Punkt U. In diesen Punkt U ist der Ursprung eines Koordinatensystems gelegt, das zur Beschreibung der Beleuchtungsstärkeverteilung der Hauptscheinwerfer des ersten Fahrzeugs 1 genutzt werden kann und welches in der Fig. 1 dargestellt ist.

In der Figur 1 ist ferner das zweite Fahrzeug 2 dargestellt, dessen Fahrer durch Hauptscheinwerfer des ersten Fahrzeugs nicht geblendet werden darf. Der Ort des zweiten Fahrzeugs 2 ist durch einen Flächenwinkel a, einen Höhenwinkel β und einer Entfernung e beschrieben, wobei der Flächenwinkel a von einer senkrechten, die Fahrzeuglängsachse I aufnehmenden Ebene und der Höhenwinkel β von einer waagerechten, die Fahrzeugslängsachse I aufnehmenden Ebene zum zweiten Fahrzeug 2 gemessen wird. Das Messen des Flächenwinkels α, des Höhenwinkels β und der Entfernung e ist aus dem Stand der Technik bekannt.

Mittels eines erfindungsgemäßen Steuergeräts kann die Beleuchtungsstärkeverteilung in der Entfernung e vom ersten Fahrzeug aus einem Speicher ermittelt werden. Der Flächenwinkel α und der Höhenwinkel β können mittels des erfindungsgemäßen Steuergeräts in kartesische Koordinaten a', β' des in der Fig. 1 dargestellten Koordinatensystems umgerechnet werden. Sind die kartesischen Koordinaten des Ortes des zweiten Fahrzeugs 2 bekannt, kann auf einfachem Wege die Beleuchtungsstärke am Ort des zweiten Fahrzeugs 2 aus einem Speicher des Steuergerätes herausgelesen werden. Ist die Beleuchtungsstärke, im Beispiel der Fig. 1 weniger als 1 Ix, kleiner als ein vorgegebener Betrag, ist eine Blendung des Fahrers im zweiten Fahrzeug 2 nicht gegeben. Eine Veränderung der Beleuchtungsstärke am Ort des zweiten Fahrzeugs ist unnötig und die an den Hautscheinwerfem des ersten Fahrzeugs eingestellte Lichtverteilung und/oder Hell-Dunkel-Grenze kann unverändert bleiben.

### Bezugszeichenliste

- 1: erstes Fahrzeug
- 2: zweites Fahrzeug
- l: Längsachse des ersten Fahrzeugs
- E: Ebene senkrecht zur Längsachse des ersten Fahrzeugs am Ort des zweiten Fahrzeugs
- α: Flächenwinkel zwischen der Längsachse des ersten Fahrzeugs und eines Strahls vom ersten Fahrzeug zum zweiten Fahrzeug
- β: Höhenwinkel zwischen der Längsachse des ersten Fahrzeugs und eines Strahls vom ersten Fahrzeug zum zweiten Fahrzeug
- e: Entfernung zwischen dem ersten Fahrzeug und dem zweiten Fahrzeug
- U: Ursprung des kartesischen Koordinatensystems in der Ebene E
- α': kartesische Koordinate des zweiten Fahrzeugs in der Ebene E
- β': kartesische Koordinate des zweiten Fahrzeugs in der Ebene E

## Patentansprüche

1. Steuergerät zum Steuern von Hauptscheinwerfern eines Fahrzeugs (1) mit einstellbaren Lichtverteilungen und mit einer einstellbaren vertikalen Hell-Dunkel-Grenze in wenigstens einer Lichtverteilung,
- mit einem Eingang zum Einlesen von Informationen über den Ort von vor dem Fahrzeug (1) befindlichen, zu entblendenden Objekten, insbesondere vorausfahrenden und/oder entgegenkommenden Fahrzeugen (2),
- mit einem Verarbeitungsmittel,
- mit welchem in Abhängigkeit der eingelesenen Informationen Stellgrößen zum Einstellen einer am rechten und/oder einer am linken Hauptscheinwerfer einstellbaren Lichtverteilung erzeugbar sind und/oder
- mit dem in Abhängigkeit der eingelesenen Informationen Stellgrößen zum Einstellen einer vertikalen Hell-Dunkel-Grenze einer an dem rechten Hauptscheinwerfer einstellten Lichtverteilung und einer vertikalen Hell-Dunkel-Grenze einer an dem linken Hauptscheinwerfer eingestellten Lichtverteilung erzeugbar sind,
- mit einem Ausgang, an welchem die Stellgrößen zur Einstellung der Lichtverteilungen und/oder der vertikalen Hell-Dunkel-Grenzen bereitstellbar sind,
**dadurch gekennzeichnet,**
- **dass** das Steuergerät einen Speicher aufweist, in welchem Beleuchtungsstärken von Orten vor den Hauptscheinwerfern für die durch das Steuergerät einstellbaren Lichtverteilungen der Hauptscheinwerfer gespeichert sind,
- **dass** mittels des Verarbeitungsmittels aus den gespeicherten Beleuchtungsstärken ermittelbar ist, ob mittels der an den Hauptsscheinwerfern eingestellten Lichtverteilungen an einem Ort vor den Hauptscheinwerfern befindlichen, zu entblendenden Objekte (2) eine Beleuchtungsstärke kleiner oder größer eines vorbestimmten Beleuchtungsstärkebetrags vorliegt und
- **dass** bei Überschreiten des vorbestimmten Beleuchtungsstärkebetrages durch die für den Ort des zu entblendenden Objektes (2) vor den Hauptscheinwerfer ermittelte Beleuchtungsstärke zum Zwecke der Reduzierung der Beleuchtungsstärke an dem Ort des zu entblendenden Objektes (2)
die mittels des Verarbeitungsmittels an den Hauptscheinwerfern
• eingestellten Hell-Dunkel-Grenzen oder
• eingestellten Lichtverteilungen durch Dimmen oder
• eingestellten Lichtverteilungen und Hell-Dunkel-Grenzen veränderbar sind.

2. Steuergerät nach Anspruch 1, **dadurch gekennzeichnet, dass** bei Unterschreiten des vorbestimmten Beleuchtungsstärkebetrages durch die für den Ort des zu entblendenden Objektes (2) vor den Hauptscheinwerfer ermittelten Beleuchtungsstärke die mittels des Verarbeitungsmittels an den Hauptscheinwerfern eingestellten Lichtverteilungen und/oder Hell-Dunkel-Grenzen unveränderbar sind.

3. Verfahren zum Steuern von Hauptscheinwerfern eines Fahrzeugs (1) mit einstellbaren Lichtverteilungen und mit einer einstellbaren vertikalen Hell-Dunkel-Grenze in wenigstens einer Lichtverteilung wobei
- Informationen über den Ort von vor dem Fahrzeug befindlichen, zu entblendenden Objekten (2), insbesondere vorausfahrenden und/oder entgegenkommenden Fahrzeugen (2) ermittelt werden,
- in Abhängigkeit der eingelesenen Informationen Stellgrößen zum Einstellen einer am rechten und/oder einer am linken Hauptscheinwerfer einstellbaren Lichtverteilung erzeugbar sind und/oder
- in Abhängigkeit der eingelesenen Informationen Stellgrößen zum Einstellen einer vertikalen Hell-Dunkel-Grenze einer an dem rechten Hauptscheinwerfer eingestellten Lichtverteilung und einer vertikalen Hell-Dunkel-Grenze einer an dem linken Hauptscheinwerfer eingestellten Lichtverteilung erzeugbar sind, und
- die Stellgrößen zur Einstellung der Lichtverteilungen und/oder der vertikalen Hell-Dunkel-Grenzen bereitgestellt werden,
**dadurch gekennzeichnet,**
- **dass** für den Ort des vor dem Fahrzeug befindlichen, zu entblendenden Objektes (2) oder die Orte der vor dem Fahrzeug befindlichen, zu entblendenden Objekte eine gespeicherte Beleuchtungsstärke oder gespeicherte Beleuchtungsstärken vor den Hauptscheinwerfern mit einem vorbestimmten Beleuchtungsstärkebetrag verglichen wird und
- **dass** bei Überschreiten des vorbestimmten Beleuchtungsstärkebetrages durch die für den Ort des zu entblendenden Objektes (2) vor den Hauptscheinwerfer ermittelten Beleuchtungsstärke oder Beleuchtungsstärken zum Zwecke der Reduzierung der Beleuchtungsstärke am Ort des zu entblenden Objekts (2) die mittels des Verarbeitungsmittels an den Hauptscheinwerfern
o eingestellten Hell-Dunkel-Grenzen
o eingestellten Lichtverteilungen durch Dimmen oder
o eingestellten Lichtverteilungen und Hell-Dunkel-Grenzen verändert werden..

4. Verfahren nach Anspruch 3, **dadurch gekennzeichnet, dass** bei Unterschreiten des vorbestimmten Beleuchtungsstärkebetrages durch die für den Ort des zu entblendenden Objektes (2) vor den Hauptscheinwerfer ermittelten Beleuchtungsstärke oder Beleuchtungsstärken die mittels des Verarbeitungsmittels an den Hauptscheinwerfern eingestellten Lichtverteilungen und/oder Hell-Dunkel-Grenzen unverändert bleiben.

5. Verfahren nach Anspruch 3 oder 4, **dadurch gekennzeichnet, dass** die Reduzierung der Beleuchtungsstärke am Ort des zu entblendenden Objektes (2) durch eine Verschiebung der Hell-Dunkel-Grenze und/oder Dimmung der Lichtverteilung oder durch Einstellung einer abblendlichtähnlichen Lichtverteilung bewirkt wird.

## Claims

1. Control unit for controlling the main headlamps of a vehicle (1) with adjustable light distributions and with an adjustable vertical cut-off line in at least one light distribution,
- with an input for reading in information about the location of those objects in the area in front of the vehicle (1) off of which glare is to be suppressed, especially from the vehicles in front and/or oncoming vehicles (2),
- with processing equipment,
- with which, based on the information that is read in, control variables used to set a light distribution - the setting of which can be set on the right main headlamp and/or on the left main headlamp - can be generated, and/or
- with which, based on the information that is read in, control variables used to set a vertical cut-off line of a light distribution set on the right main headlamp and a vertical cut-off line of a light distribution set on the left headlamp can be generated,
- with an output at which the control variables for adjusting the light distribution and/or the vertical cut-off line can be provided,
- wherein the control unit has a memory in which illumination intensities of areas in front of the main headlamps are stored for the light distributions from the main headlamps that can be configured using the control unit,
- so that it is possible to ascertain - by looking that the illumination intensities that have been stored in the processing equipment - whether an illumination intensity less than or greater than a predetermined illumination intensity value is present in the area in front of the main headlamps on the objects on which glare is to be suppressed (2) that is the result of the light distributions and
- such that, when the predetermined illumination intensity value is exceeded by the illumination intensity predetermined for the location of the object on which glare is to be suppressed (2) in front of the main headlamps, the settings below can be modified for the purposes of reducing the illumination intensity at the location of the object on which glare is to be suppressed (2) using the processing equipment that is set on the main headlamps:
• The cut-off lines set using the processing equipment at the main headlamps or
• The light distribution set via the processing equipment at the main headlamps by dimming, or
• The light distributions and cut-off lines set using the processing equipment at the main headlamps

2. Control unit in accordance with Claim 1, wherein, when the predetermined illumination intensity value determined for the location of the object on which glare is to be suppressed (2) in front of the main headlamp is undershot by the illumination intensity, the light distributions and/or cut-off lines set using the processing equipment at the main headlamps cannot be modified.

3. Method for controlling the main headlamps of a vehicle (1) with adjustable light distributions and with an adjustable vertical cut-off line in at least one light distribution, wherein
- Information ascertained about the location of those objects in the area in front of the vehicle off of which glare is to be suppressed (2), especially from the vehicles in front and/or, oncoming vehicles (2),
- based on the information that is read in, control variables used to set a light distribution - the adjustment of which can be set on the right main headlamp and/or on the left main headlamp - can be generated, and/or
- based on the information that is read in, control variables used to set a vertical cut-off line - one light distribution set on the right main headlamp and one vertical cut-off line of a light distribution set on the left main headlamp - can be generated, and
- the control variables for the adjustment of the light distribution and/or the vertical cut-off line are provided, wherein
- there is a stored illumination intensity or stored illumination intensities in front of the main headlamps, that is compared to a predetermined illumination intensity value for the location in front of the vehicle where there is an object on which glare is to be suppressed (2) or the locations in front of the vehicle where there are objects that have glare to be suppressed, and
- such that, when the predetermined illumination intensity value is exceeded by the illumination intensity or illumination intensities predetermined for the location of the object on which glare is to be suppressed (2) in front of the main headlamps, the settings below can be modified for the purposes of reducing the illumination intensity at the location of the object on which glare is to be suppressed (2) using the processing equipment that is set on the main headlamps:
∘ The cut-off lines set using the processing equipment at the main headlamps or
∘ The light distribution set using the processing equipment at the main headlamps by dimming or
∘ The light distributions and cut-off lines set using the processing equipment at the main headlamps

4. Method, in accordance with Claim 3, wherein, when the predetermined illumination intensity value is undershot by the illumination intensity determined for the location of the object on which glare is to be suppressed (2) in front of the main headlamps, the illumination intensity or illumination intensities of the light distributions and/or cut-off lines set using the processing equipment at the main headlamps remains/remain unchanged.

5. Method, in accordance with Claim 3 or 4, wherein the reduction of the illumination intensity at the location of the object on which glare is to be suppressed (2) is effected by a shift in the cut-off line and/or dimming of the light distribution or by setting a light distribution similar to low beams.

## Revendications

1. Boîtier électronique pour commander des projecteurs principaux d'un véhicule (1) avec des répartitions lumineuses réglables et avec une coupure clair-obscur verticale réglable dans au moins une répartition lumineuse,
- avec une entrée pour la lecture des informations sur l'endroit des objets à ne pas éblouir situés à l'avant du véhicule (1), surtout des véhicules (2) qui précédent et/ou se déplacent en sens inverse par rapport au véhicule,
- avec un moyen de traitement
- avec lequel en fonction des informations lues des grandeurs de réglage peuvent être générées pour le réglage d'une répartition lumineuse réglable sur le projecteur principal droit et/ou le projecteur principal gauche et/ou
- avec lequel en fonction des informations lues des grandeurs de réglage peuvent être générées pour le réglage d'une coupure clair-obscur verticale d'une répartition lumineuse réglée sur le projecteur principal droit et d'une coupure clair-obscur verticale d'une répartition lumineuse réglée sur le projecteur principal gauche,
- avec une sortie sur laquelle les grandeurs de réglage pour le réglage des répartitions lumineuses et/ou des coupures clair-obscur verticales peuvent être mises à disposition,
**caractérisé en ce**
- **que** le boîtier électronique présente une mémoire dans laquelle des éclairements des endroits à l'avant des projecteurs principaux sont mémorisés pour les répartitions lumineuses des projecteurs principaux réglables par le boîtier électronique,
- **qu'**à partir des éclairements mémorisés on peut déterminer à l'intermédiaire du moyen de traitement si au moyen des répartitions lumineuses réglées sur les projecteurs principaux des objets à ne pas éblouir (2) se trouvant à un endroit à l'avant des projecteurs principaux un éclairement inférieur ou supérieur à une valeur d'éclairement prédéterminée se présente et
- **que** lors du dépassement de la valeur d'éclairement prédéterminée par l'éclairement déterminé à l'avant des projecteurs principaux pour l'endroit de l'objet à ne pas éblouir (2) dans le but de réduire l'éclairement sur l'endroit de l'objet à ne pas éblouir (2),
• les coupures clair-obscur réglées
• les répartitions lumineuses réglées par variation de la lumière ou
• les répartitions lumineuses réglées et coupures clair-obscur réglées sur les projecteurs principaux par le moyen de traitement sont modifiables.

2. Boîtier électronique selon la revendication 1, **caractérisé en ce qu'**en sous-dépassant la valeur d'éclairement prédéterminée par les éclairements déterminés pour l'endroit de l'objet à ne pas éblouir (2) à l'avant des projecteurs principaux, les répartitions lumineuses réglées et/ou coupures clair-obscur réglées sur les projecteurs principaux à l'intermédiaire du moyen de traitement sont invariables.

3. Procédé pour commander des projecteurs principaux d'un véhicule (1) avec des répartitions lumineuses réglables et avec une coupure clair-obscur verticale réglable dans au moins une répartition lumineuse,
- des informations étant déterminées sur l'endroit des objets à ne pas éblouir (2) situés à l'avant du véhicule, surtout des véhicules qui précédent et/ou se déplacent en sens inverse (2) par rapport au véhicule,
- en fonction des informations lues des grandeurs de réglage pouvant être générées pour le réglage d'une répartition lumineuse réglable sur le projecteur principal droit et/ou le projecteur principal gauche et/ou
- en fonction des informations lues des grandeurs de réglage pouvant être générées pour le réglage d'une coupure clair-obscur verticale d'une répartition lumineuse réglée sur le projecteur principal droit et d'une coupure clair-obscur verticale d'une répartition lumineuse réglée sur le projecteur principal gauche et
- les grandeurs de réglage étant mises à disposition pour le réglage des répartitions lumineuses et/ou des coupures clair-obscur verticales,
**caractérisé en ce**
- **que** pour l'endroit de l'objet à ne pas éblouir (2) se trouvant à l'avant du véhicule ou les endroits des objets à ne pas éblouir se trouvant à l'avant du véhicule un éclairement mémorisé ou des éclairements mémorisés à l'avant des projecteurs principaux sont comparés avec une valeur d'éclairement prédéterminée et
- **que** lors du dépassement de la valeur d'éclairement prédéterminée par l'éclairement déterminé ou les éclairements déterminés à l'avant des projecteurs principaux pour l'endroit de l'objet à ne pas éblouir (2) dans le but de réduire l'éclairement sur l'endroit de l'objet à ne pas éblouir (2),
• les coupures clair-obscur réglées
• les répartitions lumineuses réglées par variation de la lumière ou
• les répartitions lumineuses réglées et coupures clair-obscur réglées sur les projecteurs principaux par le moyen de traitement sont modifiées.

4. Procédé selon la revendication 3, **caractérisé en ce que** lors du sous-dépassement de la valeur d'éclairement prédéterminée par l'éclairement déterminé ou les éclairements déterminés pour l'endroit de l'objet à ne pas éblouir (2) à l'avant des projecteurs principaux, les répartitions lumineuses réglées et/ou coupures clair-obscur réglées sur les projecteurs principaux à l'intermédiaire du moyen de traitement restent invariables.

5. Procédé selon la revendication 3 ou 4, **caractérisé en ce que** la réduction de l'éclairement sur l'endroit de l'objet à ne pas éblouir (2) est réalisée par un déplacement de la coupure clair-obscur et/ou une variation de la lumière de la répartition lumineuse ou par le réglage d'une répartition lumineuse similaire à celle du feu de croisement.
